# EUROPÄISCHE PATENTANMELDUNG

(11) **EP 4 538 561 A1**
(43) Veröffentlichungstag der Anmeldung: **16.04.2025**
(21) Anmeldenummer: 23203466.0
(22) Anmeldetag: 13.10.2023
(51) Int. Cl.: F16H 3/72, B29C 48/25

(54) **VERFAHREN ZUR ANSTEUERUNG EINER ANTRIEBS-GETRIEBEEINHEIT**

(71) Anmelder: Flender GmbH, 46395 Bocholt (DE)
(72) Erfinder: PRUSAK, Robert, 46395 Bocholt (DE); KLEIN-HITPASS, Michael, 46395 Bocholt (DE); JOSTEN, Guido, 46395 Bocholt (DE); SCHLEGEL, Eugen, 46395 Bocholt (DE)
(74) Vertreter: Michalski Hüttermann & Partner Patentanwälte mbB

(57) **Zusammenfassung**

Verfahren zur Ansteuerung einer leistungsverzweigten Antriebs-Getriebeeinheit 10, wobei die Antriebs-Getriebeeinheit 10 ein Planetengetriebe 12, einen ersten 14 und einem zweiten Elektromotor 16 umfasst und wobei der erste Elektromotor 14 mit einem Hohlrad 20 des Planetengetriebes 12 und der zweite Elektromotor 16 mit dem Sonnenrad 22 des Planetengetriebes 12 in einer Antriebsverbindung steht. Jeder der Elektromotoren 14, 16 stellt eine jeweilige Antriebsleistung zur Verfügung und sich beide Antriebsleistungen ausgangseitig des Planetengetriebes 12 einen eine summierte Antriebsleistung repräsentierenden 100%-Wert ergeben. Die Elektromotoren 14, 16 werden jeweils derart angesteuert, dass der erste Elektromotor 14 mit einer ersten Antriebsleistung L₁ und der zweite Elektromotor 16 mit einer zweiten Antriebsleistung L2 zu der summierten Antriebsleistung Lₛᵤₘ beitragen, wobei die Antriebsleitung L₁ größer als oder gleich der Antriebsleistung L₂ ist.

## Beschreibung

Die Erfindung betrifft ein Verfahren zur Ansteuerung einer leistungsverzweigten Antriebs-Getriebeeinheit, wobei die Antriebs-Getriebeeinheit ein Planetengetriebe/Stirnrad-Planetengetriebe, einen ersten und einen zweiten Elektromotor umfasst und wobei der erste Elektromotor mit einem Hohlrad des Planetengetriebes und der zweite Elektromotor mit dem Sonnenrad des Planetengetriebes in einer Antriebsverbindung steht, bei dem jeder der Elektromotoren eine jeweilige Antriebsleistung zur Verfügung stellt und sich beide Antriebsleistungen ausgangseitig des Planetengetriebes summieren.

Über derartige Antriebs-Getriebeeinheiten können beispielsweise Doppelschneckenextruder angetrieben werden. Zu nennen ist hier die DE 10 2015 016 065 A1. Doppelschneckenextruder dienen zur Durchmischung, Förderung und Verdichtung verschiedener Materialien. In der Regel werden die Materialien dabei erhitzt. Über die Antriebs-Getriebeeinheit wird das Prinzip der Leistungsverzweigung genutzt und das erzeugte Motordrehmoment auf zwei Abtriebswellen aufgeteilt. In der Regel ist die Anordnung derart getroffen, dass bei der Leistungsaufteilung in einer Größenordnung von 70% der gesamten Antriebsleistung über das Sonnenrad der Planetenstufe und in einer Größenordnung von 30% der gesamten Antriebsleistung über das drehbewegliche Hohlrad der Planetenstufe in die Getriebeeinheit eingespeist wird. Dieses Verhältnis der Antriebsleistungen führt zu einer Aufteilung der Übersetzungen, bei der die Drehzahl der Planetenräder, und somit die Geschwindigkeiten im Bereich des Zahneingriffs und in den Lagern, deutlich erhöht ist. Hieraus resultiert eine höhere Verlustleistung und ein schlechterer Wirkungsgrad. Zudem gilt es für ein Anfahren der Antriebs-Getriebeeinheit aus dem Stillstand eine bestimmte Startreihenfolge der Elektromotoren zu berücksichtigen, um während des Anfahrvorgangs zu vermeiden, dass es zu einer Drehrichtungsumkehr der Planetenräder kommt, da dies sowohl bei wälzgelagerten als auch insbesondere bei gleitgelagerten Planetenrädern zu einem ungünstigen Betriebszustand und infolgedessen zum Totalausfall der Planetenlager und somit auch des Getriebes führen kann. Es besteht ein ständiges Bedürfnis hohe Verlustleistung zu vermeiden und den Wirkungsgrad zu steigern und durch eine geeignete Ansteuerung einen ungünstigen Betriebszustand während eines Anfahrvorganges zu vermeiden.

Es ist die Aufgabe der Erfindung Maßnahmen aufzuzeigen, die die Verlustleitung reduzieren und einen ungünstigen Betriebszustand während eines Anfahrvorgangs vermeiden.

Die Lösung der Aufgabe erfolgt durch ein Verfahren mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Verfahrensausführung betrifft ein Verfahren zur Ansteuerung einer leistungsverzweigten Antriebs-Getriebeeinheit, wobei die Antriebs-Getriebeeinheit ein Planetengetriebe, einen ersten und einen zweiten Elektromotor umfasst und wobei der erste Elektromotor mit einem Hohlrad des Planetengetriebes und der zweite Elektromotor mit dem Sonnenrad des Planetengetriebes in einer Antriebsverbindung steht, bei dem jeder der Elektromotoren eine jeweilige Antriebsleistung zur Verfügung stellt und sich beide Antriebsleistungen ausgangseitig des Planetengetriebes einen eine summierte Antriebsleistung repräsentierenden 100%-Wert ergeben, wobei die Elektromotoren jeweils derart angesteuert werden, dass der erste Elektromotor mit einer ersten Antriebsleistung L₁ und der zweite Elektromotor mit einer zweiten Antriebsleistung L₂ zu der summierten Antriebsleistung Lₛᵤₘ beitragen, wobei die Antriebsleitung L₁ größer als oder gleich der Antriebsleistung L₂ beträgt.

Die Antriebs-Getriebeeinheit kann ein Gehäuseelement umfassen, in dem das Planetengetriebe und ein Stirnrad aufgenommen ist und die Motoren mit den Eingangswellen gekoppelt sind. Es kann auch vorgesehen sein, dass die beiden Elektromotoren außen an dem Gehäuseelement angeordnet sind, beispielsweise angeflanscht sind. Das Planetengetriebe umfasst zumindest eine Planetenstufe, es können auch mehrere Planetenstufen vorgesehen sein, welche mit Stirnrad- und Kegelradstufen kombiniert werden. Die zumindest eine Planetenstufe umfasst ein drehbar gelagertes Hohlrad mit Innenverzahnung und einer Außenverzahnung. Über die Außenverzahnung steht das Hohlrad zumindest mittelbar in einer Antriebsverbindung mit dem ersten Elektromotor. Bevorzugt verläuft die Antriebsverbindung über zumindest eine Stirnradstufe oder Kegelradstufe. Der zweite Elektromotor ist zumindest mittelbar, bevorzugt über eine Stirnradstufe oder Kegelradstufe, mit dem Sonnenrad der zumindest einen Planetenstufe antriebsverbunden.

Die summierte Antriebsleistung Lₛᵤₘ ergibt sich ausgangseitig des Planetengetriebes. In dem Fall, in dem lediglich eine Planetenstufe vorgesehen ist, liegt die summierte Antriebsleistung an dem Planetenträger der Planetenstufe an, der abtriebsseitig beispielsweise mit einem Abtriebsflansch oder einer Abtriebswelle verbunden sein kann. Unter dem 100%-Wert soll die abtriebsseitig summierte Antriebsleistung verstanden werden. Der 100%-Wert setzt sich somit zusammen aus jeder der in einem bestimmten Betriebszustand gelieferten einzelnen Antriebsleistungen der beiden Elektromotoren.

Vorgesehen ist, dass die von den Elektromotoren entsprechend gelieferte Antriebsleitung L₁ größer als oder gleich der Antriebsleistung L₂ ist. Hierbei ist zweckmäßig, dass der erste Elektromotor leistungsmäßig größer dimensioniert ist als der zweite Elektromotor. In einer konkreten Ausgestaltung des Verfahrens kann vorgesehen sein, dass die Antriebsleitung L₁ zwischen 50% und 70% und die Antriebsleistung L₂ zwischen 30% und 50% der summierten Antriebsleistung Lₛᵤₘ betragen. Durch diese Festlegung der Leistungsaufteilung erfolgt eine Übersetzungsanpassung der beiden Leistungsstränge zu Gunsten des Wirkungsgrades durch die Reduktion der Umwälzgeschwindigkeit der drehbeweglichen Teile, insbesondere der Planetenräder.

In einer bevorzugten Ausgestaltung des Verfahrens ist vorgesehen, dass bei einem Anfahren der Antriebs-Getriebeeinheit der erste Elektromotor gegen eine Drehung arretiert wird und der zweite Elektromotor, insbesondere von einem Stillstand ausgehend, auf eine Zieldrehzahl beschleunigt wird. Hierdurch ist sichergestellt, dass es bei einem Anfahrvorgang der Antriebs-Getriebeeinheit nicht zu einer Drehrichtungsumkehr der Planetenräder kommen kann und somit sichergestellt ist, dass es sowohl bei wälzgelagerten als auch insbesondere bei gleitgelagerten Getrieben bzw. Planetenrädern nicht zu einem ungünstigen Betriebszustand kommen kann. Eine Drehrichtungsumkehr erfolgt immer dann, wenn sich in einem Betriebszustand die Drehzahl des Sonnenrades und/oder die Drehzahl der Hohlrades derart ändern, dass das Hohlrad und das Sonnenrad die gleiche Geschwindigkeit im Zahneingriff mit den Planetenrädern haben. In diesem Zustand bleibt das Planetenrad stehen. Dreht das Hohlrad dann schneller als das Sonnenrad ändert sich die Drehrichtung der Planetenräder. Man bezeichnet diesen Vorgang auch als "überholen".

In einer besonders bevorzugten Verfahrensausgestaltung ist vorgesehen, dass bei Erreichen der Zieldrehzahl des zweiten Elektromotors, ein Anfahrmoment M₁ des ersten Elektromotors bis zu einem Wert M₁ₘᵢₙ gesteigert wird und bei Erreichen des Anfahrmoment M₁ₘᵢₙ die Arretierung des ersten Elektromotors gelöst wird. In dem auf den ersten Elektromotor bereits während der Arretierung ein Anfahrmoment aufgebracht wird, wird sichergestellt, dass der mit dem ersten Elektromotor verbundene Antriebstrang, d.h. auch das Hohlrad, in dem Moment des Lösens der Arretierung nicht rückwärts in Drehung versetzt wird. Würde im arretierten Zustand kein Anfahrmoment aufgebracht werden, dann würde das über den zweiten Elektromotor in das Planetengetriebe eingebrachte Anfahrmoment dazu führen, dass sich das Hohlrad beim Lösen der Arretierung rückwärts in Drehung versetzten würde.

Zudem ist eine Ausgestaltung des Verfahrens bevorzugt, bei der nach dem Anfahren der Antriebs-Getriebeeinheit die Drehzahl des Planetengetriebes über eine Veränderung der Drehzahl des ersten Elektromotors moduliert wird.

Die Aufgabe wird ferner durch einen Doppelschneckenextruder mit einer zwei Elektromotoren umfassenden Antriebseinheit, einer über die Antriebseinheit angetriebenen Getriebeeinheit und zwei von der Getriebeeinheit angetriebenen Extruderschnecken, wobei die Getriebeeinheit nach einem Verfahren wie zuvor beschrieben leistungsverzweigt betrieben wird.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: exemplarisch eine Darstellung eines Doppelschneckenextruders,
Fig. 2: eine leistungsverzweigte Getriebeeinheit für einen Doppelschneckenextruder und
Fig. 3: einen Ablauf von Verfahrensschritten zur Ansteuerung einer leistungsverzweigten Antriebs-Getriebevorrichtung.

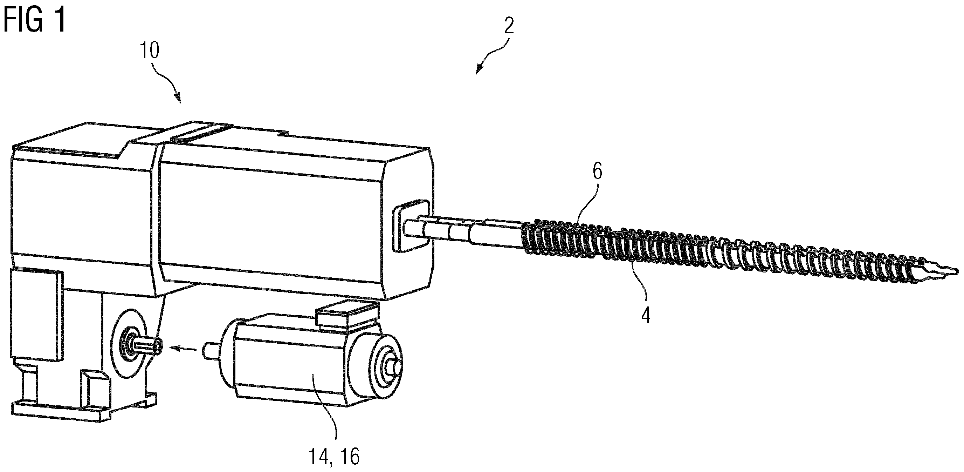

Die Figur 1 zeigt rein exemplarisch in perspektivischer und teilweise explodierter Darstellung einen Doppelschneckenextruder 2. Der Doppelschneckenextruder 2 umfasst strukturell eine Getriebeeinheit 10. Die Getriebeeinheit 10 kann ein Antriebsmoment leistungsverzweigt an zwei parallel zueinander angeordnete erste und eine zweite Extrusionsschnecke 4, 6 übertragen.

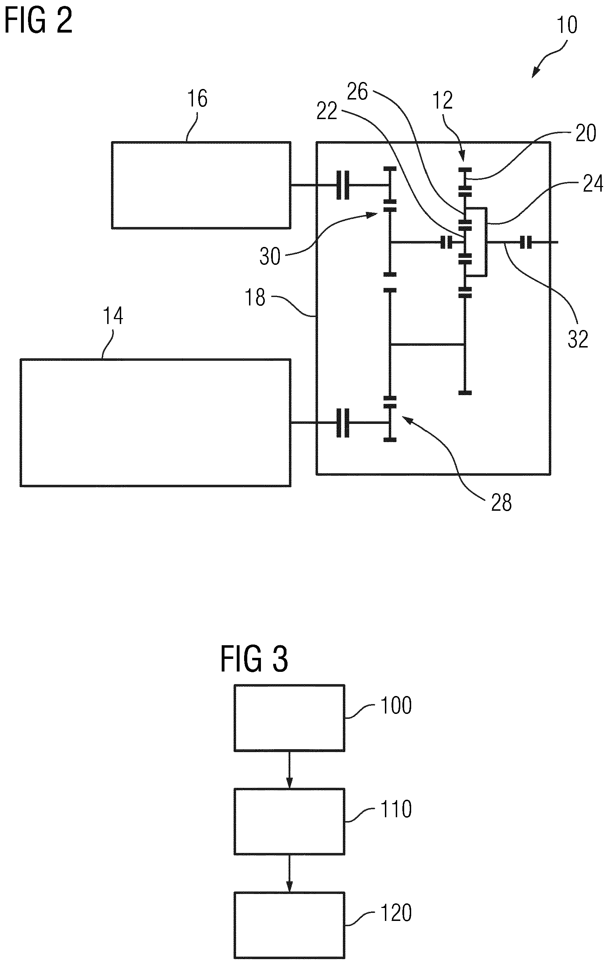

Die Figur 2 zeigt eine Getriebeeinheit 10, die zur Ausführung des hier beschriebenen Verfahrens vorgesehen sein kann. Die Getriebeeinheit 10 umfasst zunächst ein Planetengetriebe 12, das in einem Gehäuseelement 18 aufgenommen ist. Das Planetengetriebe 12 ist insofern herkömmlich aufgebaut, als dass es ein Hohlrad 20, ein Sonnenrad 22 und einen Planetenträger 24, der in diesem umlaufende Planetenrädern 26 aufweist. Die Komponenten stehen wie bekannt in einem Verzahnungseingriff miteinander.

Ferner sind ein erster und ein zweiter Elektromotor 14, 16 vorgesehen, wobei die Elektromotoren 14, 16 über einen jeweiligen Antriebsstrang in der Lage sind das Planetengetriebe 12 mit einem Antriebsmoment anzutreiben. Vorliegend ist der erste Elektromotor 14 mit dem Hohlrad 20 über eine Stirnradstufe 28 antriebsverbunden. Hierbei ist insbesondere vorgesehen, dass das Hohlrad 20 in dem Gehäuseelement 18 drehbar gelagert ist und eine Außenverzahnung aufweist, über die das Hohlrad 20 mit einer Stirnradwelle in einem Verzahnungseingriff steht und über eine Stirnradstufe 28 mit den ersten Elektromotor 14 angetrieben werden kann. Der zweite Elektromotor 16 ist mit dem Sonnenrad 22 über eine weitere Stirnradstufe 30 antriebsverbunden. Insofern man davon ausgeht, dass über den ersten und den zweiten Elektromotor ein Antrieb des Planetengetriebes 12 erfolgt, erfolgt der Abtrieb über den Planetenträger 24 auf eine nicht näher zu beschreibende Abtriebswelle 32. Mittelbare über die Abtriebswelle 32 erfolgt der Antrieb der beiden Extrusionsschnecken 4, 6, wie zu Figur 1 beschrieben.

Anhand der Figur 3 wird das Verfahren zur Ansteuerung einer leistungsverzweigten Getriebeeinheit 10 in einer möglichen, teilweise auch bevorzugten, Ausgestaltung beschrieben. In dem Verfahrensschritt 100 erfolgt ein Anfahren der Getriebeeinheit 100, beispielsweise ausgehend von einem Zustand des Stillstands. Bei dem Anfahren der Getriebeeinheit 10 wird der erste Elektromotor 14 gegen eine Drehung arretiert und der zweite Elektromotor 16 wird auf eine Zieldrehzahl beschleunigt.

In dem Verfahrensschritt 110 wird bei Erreichen der Zieldrehzahl des zweiten Elektromotors 16 ein Anfahrmoment M₁ des ersten Elektromotors 14 bis zu einem Wert Mimin gesteigert und bei Erreichen von M₁ₘᵢₙ wird die Arretierung des ersten Elektromotors 14 gelöst.

In dem Verfahrensschritt 120 werden die Elektromotoren 14, 16 jeweils derart angesteuert, dass der erste Elektromotor 14 mit einer ersten Antriebsleistung L₁ und der zweite Elektromotor 16 mit einer zweiten Antriebsleistung L₂ zu der summierten Antriebsleistung Lₛᵤₘ beitragen, wobei die Antriebsleitung L₁ größer als oder gleich der Antriebsleistung L₂ ist. Hierbei ist es möglich, die Drehzahl des Planetengetriebes 12 über eine Veränderung der Drehzahl des ersten Elektromotors 14 zu modulieren. Insbesondere ist hierbei vorgesehen, dass die Antriebsleitung L₁ zwischen 50% und 70% und die Antriebsleistung L₂ zwischen 30% und 50% der summierten Antriebsleistung Lₛᵤₘ betragen.

### Bezugszeichenliste

- 2: Doppelschneckenextruder
- 4: Extruderschnecke
- 6: Extruderschnecke
- 10: Antriebs-Getriebeeinheit
- 12: Planetengetriebe
- 14: Elektromotor
- 16: Elektromotor
- 18: Gehäuseelement
- 20: Hohlrad
- 22: Sonnenrad
- 24: Planetenträger
- 26: Planetenrad
- 28: Stirnradstufe
- 30: Stirnradstufe
- 32: Abtriebswelle

## Patentansprüche

1. Verfahren zur Ansteuerung einer leistungsverzweigten Antriebs-Getriebeeinheit (10), wobei die Antriebs-Getriebeeinheit (10) ein Planetengetriebe (12), einen ersten (14) und einem zweiten Elektromotor (16) umfasst und wobei der erste Elektromotor (14) mit einem Hohlrad (20) des Planetengetriebes (12) und der zweite Elektromotor (16) mit dem Sonnenrad (22) des Planetengetriebes (12) in einer Antriebsverbindung steht, bei dem
jeder der Elektromotoren (14, 16) eine jeweilige Antriebsleistung zur Verfügung stellt und sich beide Antriebsleistungen ausgangseitig des Planetengetriebes (12) einen eine summierte Antriebsleistung repräsentierenden 100%-Wert ergeben, wobei die Elektromotoren (14, 16) jeweils derart angesteuert werden, dass der erste Elektromotor (14) mit einer ersten Antriebsleistung L₁ und der zweite Elektromotor (16) mit einer zweiten Antriebsleistung L₂ zu der summierten Antriebsleistung Lₛᵤₘ beitragen, wobei die Antriebsleistung L₁ größer als oder gleich der Antriebsleistung L₂ ist.

2. Verfahren nach Anspruch 1, **dadurch gekennzeichnet, dass** die Antriebsleitung L₁ zwischen 50% und 70% und die Antriebsleistung L₂ zwischen 30% und 50% der summierten Antriebsleistung Lₛᵤₘ betragen.

3. Verfahren nach Anspruch 1 oder 2, **dadurch gekennzeichnet, dass** bei einem Anfahren der Antriebs-Getriebeeinheit (10) der erste Elektromotor (14) gegen eine Drehung arretiert wird und der zweite Elektromotor (16), insbesondere von einem Stillstand ausgehend, auf eine Zieldrehzahl beschleunigt wird.

4. Verfahren nach Anspruch 3, **dadurch gekennzeichnet, dass** bei Erreichen der Zieldrehzahl des zweiten Elektromotors (16), ein Anfahrmoment M₁ des ersten Elektromotors (14) bis zu einem Wert M₁ₘᵢₙ gesteigert wird und bei Erreichen von M₁ₘᵢₙ die Arretierung des ersten Elektromotors (14) gelöst wird.

5. Verfahren nach einem der Ansprüche 1 bis 4, **dadurch gekennzeichnet, dass** nach dem Anfahren der Antriebs-Getriebeeinheit (10) die Drehzahl des Planetengetriebes (12) über eine Veränderung der Drehzahl des ersten Elektromotors (14) moduliert wird.

6. Doppelschneckenextruder (2) mit einer zwei Elektromotoren (14, 16) umfassenden Getriebeeinheit (10) und zwei von der Getriebeeinheit (10) angetriebene Extruderschnecken (4, 6), **dadurch gekennzeichnet, dass** die Getriebeeinheit (10), über ein Verfahren nach einem der vorgegangenen Ansprüche leistungsverzweigt betrieben wird.
